# EUROPEAN PATENT APPLICATION

(11) **EP 1 750 317 A1**
(43) Date of publication of application: **07.02.2007**
(21) Application number: 04733466.9
(22) Date of filing: 17.05.2004
(51) Int. Cl.: H01M 4/86, H01M 8/12

(54) **ANODE SUPPORTING SUBSTRATE FOR SOLID OXIDE FUEL CELL AND PROCESS FOR PRODUCING THE SAME**

(71) Applicant: Nippon Shokubai Co.,Ltd., Osaka-shi, Osaka 541-0043 (JP)
(72) Inventor: SHIMOMURA, Masatoshi, Himeji-shi, Hyogo 6711212 (JP); NAGASHIMA, Teruhisa, Himeji-shi, Hyogo 6711242 (JP); HATA, Kazuo, Suita-shi, Osaka 5650854 (JP)
(74) Representative: Müller-Boré & Partner Patentanwälte
(86) International application number: PCT/JP2004/006996
(87) International publication number: WO 2005/112154

(57) **Abstract**

An anode support substrate excellent in redox resistance for a solid oxide fuel cell is disclosed, comprising: 40 to 80 mass % of a conductive component (A); and 20 to 60 mass % of a skeletal component (B); wherein, the support substrate has a porosity of 20 to 50 %; in a mapping picture showing a cross section region of the support substrate, observed by Energy Dispersive Spectroscopy (EDS) using an energy dispersive X-ray analyzer, a portion [AB] where the conductive component (A) and the skeletal component (B) are mixed with each other exists, a portion [A] having only the conductive component (A) exists, a specified number of portions [A] are dotted; and the dotted portion [A] has a largest length of 8 to 100 µm and an average length of 5 to 50 µm.

## Description

### TECHNICAL FIELD

The present invention relates to an anode support substrate for an electrolyte fuel cell, and particularly to an anode support substrate for a solid oxide fuel cell and a process for producing the same, which has so excellent strength properties as to keep cracks or breaks from occurring even in case where used under hard conditions of great stacking load, high temperature, and being alternately subjected to oxidizing atmosphere and reducing atmosphere, when put to practical use as a fuel cell in a stacked state such that cells obtained by compounding an electrode film and an electrolyte are laminated in multitude.

### BACKGROUND ART

In recent years, a fuel cell has been drawn attention as a clean energy source, and improvement studies and practical studies have rapidly been advanced for use thereof mainly as home generation, utility generation and automobile generation.

The typical structure of a solid oxide fuel cell is based on a stack in which self-supported film cells having an anode electrode and a cathode electrode placed on one side of a planar electrolyte and on the other side thereof respectively are laminated in multitude in a longitudinal direction. It is effective for improving generating performance of a fuel cell to make an electrolyte dense and thin. An electrolyte needs high density capable of certainly hindering the mixing of fuel gas as a generating source and air, and excellent ionic conductivity capable of reducing conduction loss to the utmost; therefore, thin-wall property and high density are required to the utmost. In addition, a fuel cell has the structure, as described above, in which cells having anode electrode / electrolyte / cathode electrode, and separators for separating / distributing fuel gas and air are alternately laminated in multitude, and great stacking load is applied to an electrolyte. Further, an operation temperature is approximately 700 to 1000°C, and considerable heat stress is applied to the electrolyte. Therefore, high-level strength and heat resistance are required for an electrolyte.

In view of such demand characteristics, a ceramic sheet mainly made of zirconia is mainly used as raw materials of an electrolyte for a solid oxide fuel cell, and a cell having an anode electrode and a cathode electrode formed on both sides of the sheet by screen printing is used.

The inventors of the present invention have advanced studies for such a planar electrolyte for a solid oxide fuel cell. Specifically, the inventors have advanced studies such as to make thin to the utmost for reducing ionic conduction loss while securing physical properties against stacking load and heat stress as well as shape characteristics such as reduction of swells, warps and burrs, and prevention of breaks due to local stress in accordance therewith, and to adjust surface roughness for improving uniformity and adhesion properties of electrode printing. The inventors formerly proposed techniques disclosed in Japanese Unexamined Patent Publications No. 2000-281438, 2001-89252 and 2001-10866.

By these techniques, an electrolyte could be greatly made thin and dense. In addition, shape characteristics thereof were improved, namely, swells, warps and burrs were reduced. As a result, strength against stacking load and resistance to heat stress in stacking cells as well as adhesion properties and uniformity of electrode printing could be greatly improved.

The inventors of the present invention have thereafter advanced studies for improving the performance of a fuel cell, and disclosed as a part thereof in Patent Re-publication No. WO99/59936 a porous ceramic sheet, a process for producing the same and a setter employed for the producing process, in substitution for improvement of a ceramic sheet used as an electrolyte. The porous sheet is available as an anode support substrate containing nickel oxide and stabilized zirconia for an anode supported cell. The thinner-wall electrolyte causes breaks due to stacking load more easily, so that an electrolyte is made thin within the natural limit and reduction of conduction loss is limited; therefore, it is conceived that the above-mentioned anode supported cell is advantageous to making the electrolyte thinner.

However, the anode support substrate for supporting an electrolyte needs electric conductivity, and is composed of a porous ceramic material by reason of requiring gas permeability allowing passage and diffusion of fuel gas as a generating source and air or gas such as carbon dioxide and water vapor produced by oxidation of the fuel, unlike the above-mentioned electrolyte. In addition, support function for having strength of a cell itself is also required for this substrate. This substrate is not sufficient yet in view of conductivity and not sufficient in crack resistance and shock resistance, deriving from porosity, whereby room for improvement is left.

A process also has recently been studied, such as to make an electrolyte further thinner to further reduce conduction loss by adopting a process for forming an anode electrode on the porous support substrate by screen printing to form an electrolyte thereon with coating and thereafter form a cathode electrode further thereon by screen printing, in addition to a gas phase method.

A technique is disclosed in Japanese Unexamined Patent Publication No. 8-306361, concerning materials for a solid electrolyte fuel cell similar to the composition of the present invention which are detailed later. This is such that an yttria stabilized zirconia rough particle group having a particle diameter of 20 to 75 µm, an yttria stabilized zirconia fine particle group having a particle diameter of approximately 0. 1 to 1 µm, and an NiO group having a particle diameter of approximately 5 to 20 µm are compounded as fuel electrode materials capable of maintaining stable performance for a long time.

This technique, however, persistently is focused on performance as fuel electrode materials, and it cannot be asserted that sufficient studies are made for substrate strength, redox resistance stability, thermal cycle resistance stability and printability of electrolyte, which are required for a substrate for supporting solid electrolyte.

With regard to the above-mentioned technique, zirconia powder as skeletal component is adjusted in granularity with division into a rough particle group and a fine particle group, while the present invention detailed below has the greatest characteristic in granularity adjustment of conductive component with division into two components different in granularity composition, and also differs clearly in function and effect, deriving from the difference of composition thereof.

Under the circumstances as described above, the inventors of the present invention have advanced improvement studies for an anode support substrate used for obtaining a supporting film fuel cell by successively coating an anode support substrate with an anode electrode, an electrolyte and a cathode electrode, and advanced the development of a porous ceramic sheet excellent in properties such as thermal shock resistance, mechanical strength, gas permeability and conductivity.

When operation and interruption are repeated under the conditions of high temperature with the use of a fuel cell system comprising a stack having a multistage stacking structure as described above, cracks or breaks are occasionally caused on the support substrate as a problem of having a great influence on the performance of the anode support substrate, in the case of not introducing inert gas for air purge such as N₂ to the side of an anode electrode, such as described in Japanese Unexamined Patent Publication No. 4-36962. The reason is conceived as follows.
1) An anode support substrate is subjected to reducing atmosphere by fuel gas such as hydrogen under the conditions of a high temperature of approximately 600 to 1000°C during operation as a fuel cell, and to oxidizing atmosphere by an inflow of air from the outside during interruption. The repetition of the oxidation and reduction causes change of state in components of the anode support substrate, so that internal strain and material deterioration are caused, which are conceived to be the cause of cracks or breaks.
2) In the case where nickel oxide is used as raw materials composing a conductive component of an anode support substrate, nickel oxide is reduced in reducing atmosphere to metallic nickel which exhibits conductivity, and then contraction is caused by approximately 40 volume % ("Solid Oxide Fuel Cell and Terrestrial Environment": written by Hiroaki Tagawa, issued by Agne Shofusha, 1998). On the contrary, metallic nickel is oxidized in oxidizing atmosphere to nickel oxide, and volume expansion is conversely caused by approximately 40 % when metallic nickel is oxidized to nickel oxide. The repetition of expansion and contraction in accordance with such change of state promotes internal strain, and simultaneously this change has a bad influence on strength of skeletal component of a substrate to induce the occurrence of cracks or breaks.

Accordingly, it is important for securing practicable performance as a fuel cell to prevent cracks or breaks in an anode support substrate from occurring in accordance with oxidation and reduction of a composition composing an anode support substrate, as described in the above-mentioned 1) and 2).

The present invention has been made by taking notice of the circumstances as described above, and provides an anode support substrate and a process for producing the same, in which the occurrence of cracks or breaks resulting from the above-mentioned 1) and 2) is reduced as less as possible while securing gas permeability among important properties as an anode support substrate for a fuel cell. In the present specification, property against cracks or breaks resulting from the above-mentioned 1) and 2) is referred to as "redox resistance" on the basis of the above-mentioned primary factor.

### DISCLOSURE OF THE INVENTION

An anode support substrate for a solid oxide fuel cell according to the present invention, which can solve the above-mentioned problem, is characterized by comprising:
40 to 80 mass % of a conductive component (A); and
20 to 60 mass % of a skeletal component (B); wherein,
the support substrate has a porosity of 20 to 50 %;
in a mapping picture showing an area of 90 µm × 120 µm of a cross section region of the support substrate, magnified with magnification ratio of 1000 times and observed by Energy Dispersive Spectroscopy (EDS) using an energy dispersive X-ray analyzer,
   a portion [AB] where the conductive component (A) and the skeletal component (B) are mixed with each other exists;
   a portion [A] having only the conductive component (A) and no the skeletal component (B) exists; five or more portions [A] are dotted; and
   the dotted portion [A] has a largest length of 8 to 100 µm and an average length of 5 to 50 µm; and
the support substrate has a three-point bending strength of 200 MPa or more.

Raw material for the above-mentioned conductive component (A) as a component of the above-mentioned anode support substrate according to the present invention is preferably oxide of one kind or more of element selected from a group consisting of Fe, Ni and Co, and raw material for the skeletal component (B) is preferably zirconia stabilized by yttria of 2.5 to 10 mol% and/or zirconia stabilized by scandia of 3 to 12 mol%.

A process for producing according to the present invention is placed as a preferable process for producing the above-mentioned anode support substrate according to the present invention, and is characterized by comprising steps of:
forming a sheet from a slurry including conductive component powder (a), skeletal component powder (b), a binder (c), and a dispersion medium (d); and
then baking the obtained sheet under an air atmosphere; wherein,
10 to 50 mass % of conductive fine particle (a₁) having an average diameter of 0.1 to 3 µm, and a conductive coarse particle (a₂) having an average diameter of 5 to 50 µm, a specific surface area of 10 to 100 m²/g and a porosity of 30 to 80 % are used as the conductive component powder (a); and
a particle having an average diameter of 0.1 to 3 µm is used as the skeletal component powder (b).

### BRIEF DESCRIPTION OF THE DRAWINGS

Fig. 1 shows a mapping picture of 1000 times and an SEI image of 1000 times of the anode support substrate obtained in Example 1.
Fig. 2 shows a mapping picture of 1000 times and an SEI image of 1000 times of the anode support substrate obtained in Comparative Example 1.

### BEST MODE FOR CARRYING OUT THE INVENTION

Under the problem to be solved as described above, the inventors of the present invention have advanced studies for improving crack resistance or break resistance (redox resistance), when an anode support substrate is repetitively subjected to thermal shock, oxidizing atmosphere and reducing atmosphere under hard use conditions, particularly, stacking load, while securing gas passage and diffusivity necessary as an anode support substrate.

As a result, as described above, the inventors completed the above-mentioned present invention by ascertaining that the above-mentioned demand characteristics as an anode support substrate for a solid oxide fuel cell can successfully be satisfied by determining the content ratio of a conductive component (A) and a skeletal component (B) composing the support substrate in a specific range and determining a porosity in a specific range, and when a portion [AB] where a conductive component (A) and a skeletal component (B) are mixed with each other, and a portion [A] having only the conductive component (A) and no skeletal component (B) exists; five or more portions [A] are dotted; and the largest length and the average length of the dotted portion [A] is in a specific range, in a mapping picture showing an area of 90 µm × 120 µm of a cross section region of the support substrate, magnified with magnification ratio of 1000 times and observed by Energy Dispersive Spectroscopy (EDS) using an energy dispersive X-ray analyzer.

The anode support substrate of the present invention has excellent conductivity and sufficient gas passage and diffusivity as described above, and is porous with eminent redox resistance. The specific composition of the anode support substrate meeting such demand characteristics is hereinafter detailed.

First in the present invention, a conductive component and a skeletal component composing the anode support substrate are composed of two kinds of conductive components of coarse particles and fine particles, and a skeletal component. This skeletal component is an essential component for securing skeletal strength necessary for the anode support substrate, and fulfills an important function in preventing local aggregation of conductive component particles to promote homogenous dispersion.

A conductive component of coarse particles is an assembly such that conductive fine particles are so weakly aggregated as to be made into coarse particles, and has innumerable pores between coarse particles and in coarse particles. Therefore, when the conductive component is subjected to reducing atmosphere during operation of a fuel cell to exist as metal and is subjected to oxidizing atmosphere by the mixing of air during the stop of operation and oxidized to metallic oxide, the pores between and in coarse particles function as relief space for volume expansion during oxidation and volume contraction during reduction, and perform the function of relaxing influence (internal strain) on the skeletal component. The conductive component of coarse particles functions also as a relay station of a current path, and also fulfills the function of smoothing conduction to a separator and an interconnector by current collecting function while supporting a path network for electrification even in the case where the current path is locally cut in the support substrate.

On the contrary, a conductive component in fine particles performs the function of forming an original current path similarly to conventional materials, and functions also as an electrode reaction field.

In the present invention, the following is necessary for producing a conductive component of coarse particles in the anode support substrate: as a conductive component powder (a) among raw components used for producing the support substrate, conductive fine particles (a₁) having an average diameter of 0.1 to 3 µm, preferably 0.3 to 2 µm, and coarse particles having an average diameter of 5 to 50 µm, preferably 8 to 20 µm, a specific surface area of 10 to 100 m²/g, preferably 12 to 50 m²/g or more, and a porosity of 30 to 80 %, preferably 40 to 70 % are used; a content ratio of the above-mentioned conductive fine particles (a₁) occupied in the whole conductive component powder (a) is determined in a range of 10 to 50 mass %, preferably 20 to 40 mass %; the above-mentioned conductive coarse particles (a₂) are adjusted to a range of 50 to 90 mass %, preferably 60 to 80 mass %, in the ratio occupied in the whole conductive component powder; and as the above-mentioned skeletal component powder (b), fine particles having an average diameter of 0.1 to 3 µm, preferably 0.3 to 1 µm are used.

A specific process for obtaining the conductive fine particles (a₁), the conductive coarse particles (a₂) and the skeletal component powder (b) as described above is detailed later.

The distribution of the above-mentioned conductive component (A) and skeletal component (B) in the anode support substrate can be measured by energy dispersive X-ray spectroscopy (EDS: Energy Dispersive Spectroscopy). Specifically, the irradiation to a cross section region of the anode support substrate as a test object with electron rays generates X-rays (characteristic X-rays) having energy intrinsic to component elements of the conductive component (A) and skeletal component (B) existing on the section region of the substrate. These X-rays are detected by an Si (Li) semiconductor detector to make electron-hole pairs of the number in proportion to energy thereof in the semiconductor and to generate electric signals. After the signals are subject to amplification and analog-digital conversion, X-ray spectrum is obtained by discrimination by using a multichannel analyzer. The elements are identified by peaks thereof and the quantity of each element is determined from peak values thereof. Additionally, images obtained as SEM inspection images are processed by a mapping program and thereby made to correspond to SEI images to determine the distribution from the distribution image of each element in the substrate.

In measuring the above-mentioned distribution, a small piece of anode support substrate under test is embedded in epoxy resin to then grind a cross section region thereof, and the ground surface is subject to pretreatment with platinum vapor deposition for use. As an energy dispersive X-ray analyzer, "JED-2200" as a trade name manufactured by JEOL Ltd. is used, and the measurement conditions are as follows.

### "Measurement conditions"

### Acceleration voltage: 20.00 kV, electric current: 0.756 nA "Detection characteristic X-ray energy"

Fe = 6.4 KeV, Ni: Kα = 7.47 KeV, Co = 6.92 KeV

Zr: Lα = 2.04 KeV

### "Detector"

A mini-cup type EDS detector (trade name: "EX-54013MHP" manufactured by JEOL Ltd.), magnification: 1000 times, detecting conditions: resolution of 0.01 KeV, PHA (Pulse Height Analyzer) mode of T2

### "Element mapping"

Software: digital mapping software "EX-55020" manufactured by JEOL Ltd., the number of picture elements (resolution of element mapping images) : 256 × 192, duel time: 0.1 ms, the number of sweeps (the number of processing integration): 50 times

### "Mapping picture"

A mapping picture of a conductive component in an area of 90 µm × 120 µm magnified by 1000 times with the above-mentioned EDS detector

Most of portions [A] where only the conductive component (A) exists are displayed as an elliptical form, a circular form or a tumbler form into which they are connected by this detection method, and are observed in a dispersing state by five or more, generally ten or more, at the maximum fifty or more, typically approximately thirty in the above-mentioned area. The length of the dispersing portions [A] signifies the largest length of an elliptical form or a tumbler form, or the diameter of a circular form of the portions [A] observed in the mapping picture, and is actually measured from mapping images by a vernier caliper.

In the present invention, only the largest length of the dispersing portions [A] is determined at 8 to 100 µm, and the smallest length thereof is approximately 1 to 3 µm; the average value of these lengths is preferably in a range of 5 to 50 µm, particularly 8 to 40 µm.

As described above, the anode support substrate of the present invention has a conductive component (A) for allowing conductivity and ceramic as a skeletal component (B) of the support substrate, as main component materials. The above-mentioned conductive component (A) is an essential component for allowing conductivity to the support substrate. The examples of conductive component powder (a) as raw materials therefor include metallic oxides such as iron oxide, nickel oxide and cobalt oxide, which are changed to conductive metal in reducing atmosphere during operation of a fuel cell, or oxides of composite metal such as nickel ferrite and cobalt ferrite, containing two kinds or more of these oxides. These powders can be used singly or in a proper combination of two kinds or more as required. Among these conductive component powders (a), iron oxide, cobalt oxide and nickel oxide are high in general-purpose properties in consideration of costs and conductivity, and nickel oxide is the most general.

In the present invention, conductive fine particles (a₁) having an average diameter of 0.1 to 3 µm, preferably 0.3 to 2 µm, and conductive coarse particles (a₂) detailed below are used together as the above-mentioned conductive component powder (a) in a range of the former: 10 to 50 mass %, preferably 20 to 40 mass %, and the latter: 50 to 90 mass %, preferably 60 to 80 mass %.

The above-mentioned conductive fine particles (a₁) are homogenously distributed on the whole surface of the anode support substrate according to the present invention, and are important component for securing conductivity during operation as a fuel cell. The particles in the above-mentioned appropriate granularity range need to be contained within an appropriate blending ratio range for effectively performing the function. Too fine average diameter of the conductive fine particles (a₁) brings aggregation with time so easily as to occasionally cause a problem of the cutting of conductive path and the stoppage of pores, and too insufficient blending quantity thereof brings a possibility of running short of conductivity. Alternatively, too large average diameter thereof roughens a network for conduction to bring a tendency toward poor conductivity, and too much blending quantity thereof brings aggregation with time so easily as to easily cause a problem of the cutting of conductive path and the stoppage of pores.

Such conductive fine particles (a₁) can easily be obtained, for example, by an oxidation heating method such that metallic fine particles are oxidized by heating to approximately 400 to 600°C on a fluidized bed or a moving bed, and then pulverized and classified; a thermal decomposition method such that metallic compounds such as nitrate and carbonate are decomposed by heating to approximately 500°C or more, and thereafter pulverized and classified; and a wet method such that solution of a metallic compound is neutralized with alkali into hydroxide, and thereafter decomposed by heating to approximately 500°C or more, and then pulverized and classified.

On the other hand, conductive coarse particles (a₂) having a 50-volume % diameter (an average diameter), which is measured by a laser scattering type particle-size distribution measuring apparatus (trade name: "SALD1100" manufactured by SHIMADZU CORPORATION), of 5 to 50 µm, preferably 8 to 30 µm, a specific surface area, which is measured by a BET method, of 10 to 100 m²/g, preferably 15 to 50 m²/g, and a porosity of 30 to 80 %, preferably 40 to 70 %, are used in a range of 50 to 90 mass % in the ratio occupied in the whole conductive component powder (a) as the conductive coarse particles (a₂) used together with the above-mentioned conductive fine particles (a₁).

With regard to the conductive coarse particles (a₂), a 50-volume % diameter (an average diameter) of less than 5 µm causes portions where only the conductive component (A) exists to be made with difficulty to bring insufficient redox resistance, while a 50-volume % diameter (an average diameter) of more than 50 µm causes sufficient conductive path to be obtained with difficulty to bring a tendency to decrease conductivity. A specific surface area of less than 10 m²/g brings insufficient porosity to tend to run short of redox resistance, while as much specific surface area as more than 100 m²/g requires the binder quantity for forming a sheet to be increased to easily cause a problem such that warps and swells are easily caused after baking. In addition, a porosity of less than 30 % deteriorates gas permeability and gas diffusivity, while a porosity of more than 80 % brings a tendency to decrease substrate strength.

The above-mentioned conductive fine particles (a₁) are particularly preferably such that pore volume measured with porosity measurement by a mercury press-in method is in a range of 1 to 10 cm³/g, preferably 2 to 5 cm³/g, and 90-volume % diameter measured by a laser scattering type particle-size distribution measuring apparatus (trade name: "SALD1100" manufactured by SHIMADZU CORPORATION) is in a range of 20 to 100 µm, preferably 30 to 80 µm.

The conductive coarse particles (a₂) can easily be obtained, for example, in such a manner that nitrate, sulfate, carbonate, acetate, oxalate, citrate, chloride, hydroxide, or the like of conductive component metal is pyrolyzed at a temperature of 400 to 1000°C, preferably 600 to 800°C, under oxidizing atmosphere and classified as required.

Other methods of obtaining the conductive coarse particles (a₂) are effectively a method such that conductive component oxide powder in fine particles having a diameter of approximately 0.1 to 1 µm is spray-dried into granules having an average particle diameter of 5 to 50 µm and a 90-volume % diameter of 20 to 100 µm, and thereafter the granules are calcined at a temperature of approximately 200 to 1000°C. The calcined powder is particularly preferably such as to be pyrolyzed by using carbonate and oxalate.

In the present invention, the above-mentioned conductive fine particles (a₁) and conductive coarse particles (a₂) are used together at a ratio of the former: 10 to 50 parts by mass and the latter: 50 to 90 parts by mass as the conductive component powder (a), which is used together with a proper quantity of the skeletal component powder (b) composed in a predetermined granularity. As a result, it becomes possible to obtain the anode support substrate eminent in redox resistance, in which, in a mapping picture of the conductive component showing a cross section region thereof, having an area of 90 µm × 120 µm and being magnified by 1000 times, and observed by the Energy Dispersive Spectroscopy (EDS) using an energy dispersive X-ray analyzer, a portion [AB] where the conductive component (A) and the skeletal component (B) are mixed with each other, and five or more portions [A] where only the conductive component (A) exists, the portions [A] dispersing in the section region, the portions [A] meeting characteristics such that a largest length is 8 to 100 µm and an average length is 5 to 50 µm.

When the largest length of the above-mentioned portions [A] is below 8 µm and the average length thereof is below 5 µm, redox resistance tends to be deteriorated, while when the largest length thereof exceeds 100 µm and the average length thereof exceeds 50 µm, strength and conductivity of the substrate are greatly deteriorated.

In the case where the ratio of the above-mentioned conductive coarse particles (a₁) occupied in the whole conductive component powder (a) is below 50 mass %, the portions [A] where only the conductive component (A) exists fall below five easily in the above-mentioned mapping picture, in which case redox resistance runs short clearly. On the contrary, in the case where the ratio of the conductive coarse particles (a₂) occupied in the whole conductive component powder (a) exceeds 90 mass %, the portions [A] where only the conductive component (A) exists are certainly five or more, so that redox resistance is excellent; however, conductivity of the support substrate is so deteriorated as not to allow an anode support substrate.

As described above, the above-mentioned conductive component powder (a) preferably used in the present invention is oxide of one kind or more of element selected from Fe, Ni and Co. In addition to these metallic oxides and composite metallic oxides, one kind or more of metallic oxides such as ceria, yttria-doped ceria, samaria-doped ceria, prasea-doped ceria and gadolia-doped ceria, which exhibit conductivity in reducing atmosphere; and noble metals such as platinum, palladium and ruthenium, which exhibit conductivity in reducing atmosphere can be used together therewith by proper quantity.

The skeletal component (B) as another raw component is an important component for securing strength necessary as an anode support substrate, particularly strength against stacking load and redox resistance; zirconia, alumina, titania, ceria, aluminum-magnesium spinel, aluminum-nickel spinel, and the like are used singly or as a mixture of two kinds or more. Among these, stabilized zirconia is the highest in general-purpose properties.

Preferable examples of stabilized zirconia include zirconia in which oxides of alkaline earth metal such as MgO, CaO, SrO and BaO; oxides of rare earth element such as Y₂O₃, La₂O₃, CeO₂, Pr₂O₃, Nd₂O₃, Sm₂O₃, Eu₂O₃, Gd₂O₃, Tb₂O₃, Dy₂O₃, Er₂O₃, Tm₂O₃ and Yb₂O₃; and oxides of one kind, or two kinds or more selected from Sc₂O₃, Bi₂O₃ and In₂O₃ are solid-solved as a stabilizer, or dispersion-strengthened zirconia in which alumina, titania, Ta₂O₅, Nb₂O₅, and the like are added thereto as a dispersion strengthening agent.

Cerias and bismuths are also usable in which one kind, or two kinds or more of CaO, SrO, BaO, Y₂O₃, La₂O₃, Ce₂O₃, Pr₂O₃, Nb₂O₃, Sm₂O₃, Eu₂O₃, Gd₂O₃, Tb₂O₃, Dr₂O₃, Ho₂O₃, Er₂O₃, Yb₂O₃, PbO, WO₃, MoO₃, V₂O₅, Ta₂O₅ and Nb₂O₅ is added to CeO₂ or Bi₂O₃. Among these, zirconia stabilized by yttria of 2.5 to 12 mol% and/or zirconia stabilized by scandia of 3 to 12 mol% are particularly preferable.

The ratio of the above-mentioned conductive component (A) and skeletal component (B) is important for allowing proper conductivity and strength properties to the anode support substrate to be obtained, and relatively large quantity of the conductive component (A) improves conductivity as the support substrate; however, relatively small quantity of the skeletal component (B) deteriorates strength properties and redox resistance, while relatively small quantity of the conductive component (A) deteriorates conductivity though the increase of the skeletal component (B) in quantity improves strength properties and redox resistance. Therefore, the blending ratio of both should properly be determined in consideration of balance between these, and the ratio varies somewhat with kinds of the conductive component (A); it is preferable that the skeletal component (B) is typically in a range of 60 to 20 mass % with respect to 40 to 80 mass % of the conductive component (A), and for obtaining more excellent redox resistance, the skeletal component (B) is in a range of 50 to 30 mass % with respect to 50 to 70 mass % of the conductive component (A).

The conductivity as the anode support substrate is preferably higher, and desirably at least 200 S/cm or more as a rough standard in view of practicability. In the case of less than this value, cracks are developed in the substrate and a part of conductive path is cut off, so that internal resistance as a conductive layer becomes so excessive as to deteriorate generating performance. On the other hand, in the case of using nickel oxide as conductive component raw materials, when the ratio of metallic nickel occupied in the support substrate exceeds approximately 40 mass %, conductivity under reducing atmosphere is abruptly increased; conductivity in the order of 0.1 S/cm is raised up to the order of 1000 S/cm under reducing atmosphere of 1000°C. Accordingly, in the case of using nickel oxide as conductive component raw materials, it is desirable that the ratio of the conductive component (A) is raised to 40 mass % or more.

The anode support substrate of the present invention is composed of the conductive component (A) and the skeletal component (B) as described above, and the skeletal component (B) secures strength against stacking load and redox resistance, while the conductive component (A) allows conductivity to the substrate. As described above, pores for passing and diffusing fuel gas, air or fuel exhaust gas are necessary for the support substrate composed thereof, and porosity as a whole is preferably 20 % or more under oxidizing atmosphere in order to smoothly pass and diffuse these gases. A porosity of less than 20 % brings a possibility that the above-mentioned gases are insufficiently passed and diffused to possibly cause the decrease of generation efficiency though the contraction of the conductive component (A) under reducing atmosphere increases the porosity. In addition, in the case of using metallic oxide such as nickel oxide as the conductive component (A), as described above, when expansion and contraction are caused due to change between metallic oxide and metal by the repetition of oxidation and reduction, the porous portion serves as relief space for expansion and contraction to perform the function of relaxing an increase in internal stress and contribute to an improvement in redox resistance. In consideration of such points, porosity is more preferably 25 % or more, further more preferably 30 % or more under oxidizing atmosphere.

However, too high porosity deteriorates strength against stacking load, thermal shock resistance and resistance to heat stress as the anode support substrate to easily break the support substrate and cause cracks by stacking load in placing as a stack, or additionally bring a tendency to run short of conductivity by reason of sparse distribution of the conductive component (A), so that porosity is 50 % or less, preferably 45 % or less and more preferably 40 % or less at the highest under oxidizing atmosphere.

Naturally, it is preferable that the anode support substrate of the present invention offers uniform gas passage and diffusivity as a whole; therefore, it is desired that the distribution of pores is uniform over the whole substrate. The preferable average diameter of pores is 2 µm or more and 20 µm or less. An average diameter of pores less than 2 µm brings a tendency to run short of gas passage and diffusivity as well as relief space for expansion and contraction by oxidation and reduction, so that the same problem as the above-mentioned case of a shortage of porosity is occasionally caused. On the contrary, too large average diameter brings a tendency to run short of strength and conductivity similarly to the case of an excess of porosity, so that the average diameter is preferably 20 µm or less. The more preferable average diameter of pores is 3 µm or more and 15 µm or less.

The porosity of the support substrate can be measured by an automatic porosimeter, and the average diameter of pores can be measured by actual measurement with a vernier caliper from an SEM picture of a longitudinal cross section region of the support substrate.

It is essential for the anode support substrate of the present invention to have a three-point bending strength of 150 MPa or more. In the case of less than 150 MPa, handling strength runs short and the substrate itself has cracks caused or is easily broken in forming anode; electrolyte and cathode on the substrate, so that the function as the substrate is not performed.

The three-point bending strength is preferably higher, more preferably 200 MPa or more for the reason that pores are necessary for having gas passage and diffusivity. The three-point bending strength is a value by measuring a rectangular substrate of 30 mm × 5 mm as a specimen under test with a span of 20 mm in conformity to JIS R 1601.

Next, the important demand characteristic in the present invention is redox resistance. A desirable standard thereof is such that cracks are not observed on the substrate surface in the after-mentioned redox test or sufficient conductivity is retained in a state after five-time repetitive redox tests as described later, in consideration of operating status when put to practical use in a stacking state as a stack of a fuel cell.

When put to practical use as a fuel cell, as described above, the anode support substrate of the present invention is subjected to reducing atmosphere at a temperature of 700 to 1000°C during operation and to oxidizing atmosphere by an inflow of air from the outside during interruption, which are repeated many times in a stacking state as a stack in large quantities. Accordingly, in order to secure properties against such operating conditions, a redox resistance evaluation test method simulating the operating conditions needs to be clarified. Then, in order to standardize the after-mentioned redox test as a redox resistance evaluation test method, the case where cracks are not visually observed on the substrate surface is evaluated as pass after the redox test in which a disc-like substrate for test having a diameter of 34 mm × a thickness of 0.4 mm is used on the assumption of an anode support substrate of practical size, and raised perpendicularly in the middle portion of a cylindrical tube put horizontally having a diameter of 40 mm, and then subjected to oxidizing atmosphere for 3 hours and to reducing atmosphere for 3 hours at a temperature of 980°C by alternate repetition of five times.

With regard to atmosphere adjustment, the time when hydrogen flows on the side of one surface of the substrate for test is regarded as reducing atmosphere (during generation), and the time when the flow of hydrogen is stopped to circulate air is regarded as oxidizing atmosphere (during interruption of generation).

With regard to the flow rate of each gas, it is preferred that the rate of hydrogen is in a range of 75 to 1500 ml/min and the rate of air is in a range of 150 to 3000 ml/min in terms of room temperature (25°C). The time for circulating gas flow does not need to be prolonged further on condition that the substrate is certainly subjected to oxidizing atmosphere and reducing atmosphere alternately, and it is sufficient for the substrate to be subjected thereto for 2 hours in the case of a thickness of 0.4 mm and a porosity of 20 to 50 % though affected by thickness and porosity of the substrate. However, the substrate may be subjected for 3 hours or more, such as 6 hours, for further certainty. It is conceived that more repeated times of oxidizing atmosphere and reducing atmosphere can evaluate durability more accurately, and in many cases cracks or breaks are conceived to easily occur at the beginning of the repetition, so that it is determined that the substrate can endure at least ten-time repetition if there is no problem under five-time repetition.

Therefore, a redox resistance evaluation test adopted in the present invention is such that hydrogen is 750 ml/min and air is 1500 ml/min in terms of room temperature (25°C), flow time is 3 hours, and repeated times of oxidizing atmosphere and reducing atmosphere are five times. In order to improve reliability of evaluation data, the same evaluation test is performed by using at least five sheets of substrates for test, and the case where a crack or break is detected even on one sheet is evaluated as poor redox resistance. With regard to observation of cracks or breaks, the whole one surface of the substrate under test after the above-mentioned redox test is visually observed for the presence of light transmission under an illuminance of 80 candelas, and the case where light transmission is observed even on one spot is determined at the presence of a crack or break.

The size as the substrate for test is persistently prescribed in the above-mentioned test, and needless to say, size, shape and thickness of the anode support substrate can optionally be modified in accordance with stack shape, resistance to stacking load and conducting / generating performance to be required.

The shape of the anode support substrate of the present invention may be any of a circular form, an elliptical form, a rectangular form and a rectangular form having radius, and have one, or two or more holes of a circular form, an elliptical form, a rectangular form and a rectangular form having radius similarly in these substrates. In addition, the area of the substrate is not particularly limited; generally 50 cm² or more, preferably 100 cm² or more in consideration of practicability. In the case of having holes in the substrate sheet, such as a donut shape, this area signifies the total area including the area of the holes.

Next, the process for producing the anode support substrate according to the present invention is described.

With regard to the anode support substrate of the present invention, predetermined quantities of the above-mentioned conductive fine particles (a₁), conductive coarse particles (a₂) and skeletal component powder (b) are homogenously mixed together with a binder (c) and dispersion medium (d), a dispersant and a plasticizer as required, to obtain a slurry. The slurry is applied with proper thickness on a smooth film such as a polyester film by optional means such as a doctor blade method, a calender roll method and an extrusion method to obtain a green sheet by drying to remove the dispersion medium (d) with volatilization.

Kinds of the binder (c) used for producing the green sheet are not particularly limited, and conventionally known organic binders can be used in proper selection. Examples of organic binders include ethylene copolymer, styrene copolymer, acrylate or methacrylate copolymer, vinyl acetate copolymer, maleic acid copolymer, vinyl butyral resin, vinyl alcohol resin, waxes, and ethyl cellulose.

From the viewpoint of moldability, punchability, strength, and pyrolytic property during baking of the green sheet, preferable examples among these include polymers obtained by polymerizing or copolymerizing at least one kind of alkyl acrylates having an alkyl group with a carbon number of 10 or less, such as methyl acrylate, ethyl acrylate, propyl acrylate, butyl acrylate, isobutyl acrylate, cyclohexyl acrylate, and 2-ethylhexyl acrylate; alkyl methacrylates having an alkyl group with a carbon number of 20 or less, such as methyl methacrylate, ethyl methacrylate, butyl methacrylate, isobutyl methacrylate, octyl methacrylate, 2-ethylhexyl methacrylate, decyl methacrylate, dodecyl methacrylate, lauryl methacrylate, and cyclohexyl methacrylate; acrylates or methacrylates having a hydroxyalkyl group, such as hydroxyethyl acrylate, hydroxypropyl acrylate, hydroxy methacrylate, and hydroxypropyl methacrylate; aminoalkyl acrylates or aminoalkyl methacrylates such as dimethylaminoethyl acrylate, and dimethylaminoethyl methacrylate; and carboxyl group-containing monomers such as acrylic acid, methacrylic acid, maleic acid and monoisopropyl maleate; these polymers can be used singly, or in a proper combination of two kinds or more as required.

Acrylate or methacrylate copolymer having a number-average molecular weight of 5, 000 to 200, 000, preferably 10, 000 to 100, 000, is particularly preferable among these, and above all, it is recommended that copolymer containing isobutyl methacrylate and/or 2-ethylhexyl methacrylate by 60 mass % or more as a monomer component is the most preferable.

The use ratio of the above-mentioned raw material powder (conductive component powder and skeletal component powder) and binder (c) is appropriately in a range of the latter: 5 to 30 parts by mass, preferably 10 to 20 parts by mass, with respect to the former: 100 parts by mass. Too short used quantity of the binder brings insufficient strength and flexibility of the green sheet, while too large quantity thereof causes not merely viscosity control of the slurry to become difficult but also decomposition release of the binder component during baking to be increased and intensified, whereby the green sheet having homogeneous surface quality is obtained with difficulty.

The following can be used in proper selection as the dispersion medium (d) used for producing the green sheet: water; alcohols such as methanol, ethanol, 2-propanol, 1-butanol, 1-hexanol, and 1-hexanol; ketones such as acetone and 2-butanone; aliphatic hydrocarbons such as pentane, hexane, and heptane; aromatic hydrocarbons such as benzene, toluene, xylene, and ethylbenzene; and acetates such as methyl acetate, ethyl acetate, and butyl acetate. These dispersion mediums can also be used singly, or in a proper combination of two kinds or more as required. Among these dispersion mediums, 2-propanol, toluene, and ethyl acetate are the most general.

With regard to preparation of slurry for producing the green sheet, the above-mentioned conductive component powder (a), skeletal component powder (b), binder (c), and dispersion medium (d) are homogenously mixed together with a dispersant for deflocculation and promoting dispersion of raw material powder, and a plasticizer as required, to obtain slurry in a homogeneous dispersion state.

Examples of a dispersant herein used include polymeric electrolytes such as polyacrylic acid and ammonium polyacrylate; organic acids such as citric acid and tartaric acid; copolymer of isobutylene or styrene and maleic anhydride, ammonium salt and amine salt thereof, and copolymer of butadiene and maleic anhydride. A plasticizer has the function of improving flexibility of the green sheet, and specific examples thereof include phthalates such as dibutyl phthalate and dioctyl phthalate; glycols such as propylene glycol, and glycol esters.

In the present invention, it is desirable that surface roughness of the substrate is adjusted to a proper range for excellent printability and the formation of an electrode printing layer or an electrolyte layer having more uniformity and high adhesion properties. Specifically, in surface roughness measured by a laser optical type three-dimensional shape measuring apparatus, it is desirable that averaged roughness depth (Rz: Germany Standard "DIN4768") is in a range of 1 to 10 µm and arithmetic average roughness intermediate value (Ra: Germany Standard "DIN4768") is in a range of 0.1 to 4 µm.

The particle-size distribution of the above-mentioned raw material powder signifies a value measured by the following method. The particle-size distribution of the raw material powder is a measured value by using a laser diffraction type particle-size distribution measuring apparatus "SALD-1100" manufactured by SHIMADZU CORPORATION in such a manner that an aqueous solution in which 0.2 mass % of sodium metaphosphate is added as a dispersant into distilled water is prepared for dispersion medium, and 0.01 to 1 mass % of a test sample is added into approximately 100 cm³ of the dispersion medium and dispersed by ultrasonic treatment for 1 minute.

With regard to the anode support substrate of the present invention, a process is adopted such that slurry composed of the above-mentioned raw materials is applied with proper thickness on a resin sheet such as polyester and dried into a green sheet. The green sheet is punched into a predetermined size, and thereafter placed on a porous setter on a column plate or held between porous setters, and then baked by heating under air atmosphere for approximately 1 to 5 hours at a temperature of approximately 1100 to 1500°C, preferably 1200 to 1450°C, most generally 1250 to 1400°C, as is disclosed in the above-mentioned Patent Re-publication No. WO99/59936.

A setter for producing a porous ceramic sheet made of a sheet-like ceramic body containing [NiO] unit with high gas permeability by 40 to 90 mass % is appropriately used as the porous setter in order to smoothly release cracked gas occurring in quantities deriving from the binder (c) during the sintering of the green sheet.

In order to put the anode support substrate of the present invention thus obtained to practical use as a fuel cell, it is preferable that substrate thickness is 0.2 mm or more, more preferably 0.3 mm or more, and 3 mm or less, more preferably 1 mm or less, for the purpose of reducing conduction loss as less as possible while satisfying redox resistance, demand strength, and gas permeability and diffusivity.

On the occasion of using the anode support substrate of the present invention as a member for a solid oxide fuel cell, an anode electrode is formed on one surface of the support substrate to form a thin electrolyte thereon and a cathode electrode further thereon. A forming method of those electrodes and thin electrolyte is not particularly limited, the following methods can properly be used: gas phase methods such as a plasma spraying method like VSP, a flame spraying method, a PVD (physical vapor deposition) method, a magnetron sputtering method, and an electron-beam PVD method; and wet methods such as a screen printing method, a sol-gel method, and a slurry coat method. The thickness of a thin anode and a thin cathode is adjusted to typically 3 to 300 µm, preferably 5 to 100 µm, and the thickness of a thin film electrolyte is adjusted to typically 3 to 100 µm, preferably 5 to 30 µm.

### EXAMPLES

The present invention is described more specifically hereinafter by referring to examples and comparative examples. However, the present invention is not limited by the following examples, and can also be worked with proper modifications within the scope of being capable of adapting to the above- and after-mentioned content. Such modifications are included in the technical scope of the present invention.

### Example 1

Basic nickel carbonate powder manufactured by Wako Pure Chemical Industries, Ltd. was pyrolyzed in air at a temperature of 500°C for 5 hours to thereby obtain nickel oxide coarse particles having a specific surface area of 46 m²/g, a particle size distribution of 15 µm in 50-volume % diameter, 28 µm in 90-volume % diameter, and a porosity of 68 %.

In a nylon pot into which zirconia ball having a diameter of 15 mm was charged, were put 40 parts by mass of the coarse particles, 25 parts by mass of nickel oxide powder having a 50 volume % diameter of 0.5 µm and a 90 volume % diameter of 3.1 µm manufactured by KISHIDA CHEMICAL Co. , Ltd. as nickel oxide fine particles, 35 parts by mass of 3 mol % yttria stabilized zirconia (3YSZ) powder (trade name: "HSY-3.0" manufactured by Daiichi Kigenso Kagaku Kogyo Co., Ltd., an average particle diameter: 0.45 µm), 15 parts by mass of a binder (molecular weight: 30000, glass-transition temperature: -8°C) composed of a methacrylic copolymer, 2 parts by mass of dibutyl phthalate as a plasticizer, and 50 parts by mass of toluene / isopropanol mixed solvent (mass ratio = 3/2) as dispersion medium, to prepare slurry by ball-milling at approximately 60 rpm for 12 hours.

The obtained slurry for application was defoamed by condensation for adjusting viscosity thereof to 50 poises. After the slurry was passed through a filter of 100 meshes, applied and dried on a polyethylene terephthalate (PET) film by a doctor blade method to obtain an NiO/3YSZ (65/35) green sheet having a thickness of 0.5 mm.

This green sheet was cut into predetermined measurement and fired under the atmosphere at a temperature of 1400°C for 2 hours to thereby obtain a disc-like substrate for test having a diameter of 34 mm × a thickness of 0.4 mm.

The distribution of Ni and Zr on a cross section region of the obtained substrate was observed by using an energy dispersive X-ray analyzer (trade name: "JED-2200" manufactured by JEOL Ltd.). The analysis of the distribution was carried out by using a software "digital mapping software EX-55020" manufactured by JEOL Ltd. The measurement conditions were as follows.
Preparation of observation samples: each sample substrate is embedded in epoxy resin to thereafter grind a cross section region
Sample pretreatment: platinum vapor deposition
Acceleration voltage: 20 kV, magnification: 1000 times, PHA mode: T2, the number of pixels: 256 × 256 × 192
Duel time: 0.1 ms, the times number of sweeps: 50 times
Detection characteristic X-ray energy Ni : Kα = 7.41 KeV
Zr : Lα = 2.04 KeV

As a result of the above-mentioned analysis, 18 pieces of a globular form having a diameter of 5 to 20 µm was dispersed in the section region of the sample. The largest diameter thereof was 27 µm, and the average diameter thereof was 13.4 µm. In the globular dispersion portions, only nickel oxide component as conductive component was detected and zirconia oxide component was not detected. On the other hand, it was confirmed that nickel oxide component as conductive component and 3YSZ as skeletal component were homogenously mixed in portions except the globular dispersion portions.

Then, redox resistance and conductivity were evaluated by the following procedure. As a result, excellent redox resistance was exhibited, and the initial conductivity was 800 S/cm and the conductivity after five-time redox resistance evaluation tests was 550 S/cm.

Further, the disc-like substrate having a diameter of 34 mm × a thickness of 0.4 mm obtained by baking under the atmosphere at a temperature of 1400°C for 2 hours was cut out at intervals of a width of 5 mm to obtain a rectangular specimen for test of 30 mm × 5 mm. The three-point bending strength of the obtained specimen was measured 280 MPa in conformity to JIS R 1601.

### "Redox resistance and conductivity evaluation method"

A disc-like substrate for test having a diameter of 34 mm × a thickness of 0.4 mm was used. This substrate was inserted into a bow-shaped holding fixture made of zirconia with a 0.4 mm-wide notch cut, and set in the middle portion of a cylindrical tube put horizontally having an inside diameter of 40 mm × a length of 600 mm. The middle portion of the cylindrical tube was installed in a tubular electric furnace, and subjected to oxidizing atmosphere with an air flow of 1500 ml/min for 3 hours and to reducing atmosphere with a hydrogen flow of 750 ml/min for 3 hours by alternate repetition of five times. Nitrogen was made to flow in gas switching of the air flow and hydrogen flow so as not to mix oxygen and hydrogen together directly. Thereafter, the substrate for test was cooled down to room temperature and then visually observed for the presence of breaks or cracks. In the case of no breaks nor cracks on the substrate for test, it was determined that the substrate had redox resistance.

A platinum wire was adhered to an end face of the substrate for test in a thickness direction by using conductive paste, and the substrate was subjected to reducing atmosphere for 2 hours. Then, the conductivity was measured as the initial conductivity and the conductivity after redox resistance evaluation (five-time repetition) was measured in reducing atmosphere at a temperature of 980°C.

### Example 2

Basic nickel carbonate powder manufactured by KISHIDA CHEMICAL Co., Ltd. was pyrolyzed in air at a temperature of 700°C for 5 hours to thereby obtain nickel oxide coarse particles having a specific surface area of 13 m²/g, a particle-size distribution of 10 µm in 50-volume % diameter, 21 µm in 90-volume% diameter, and a porosity of 47 %.

In a nylon pot into which zirconia ball having a diameter of 15 mm was charged, were put 35 parts by mass of the coarse particles, 30 parts by mass of the same nickel oxide fine particles manufactured by KISHIDA CHEMICAL Co., Ltd. as that used in the above-mentioned Example 1, 35 parts by mass of 4 mol% scandia stabilized zirconia (4ScSZ) powder (trade name: "4ScSZ" manufactured by Daiichi Kigenso Kagaku Kogyo Co., Ltd., an average particle diameter: 0.45 µm), 15 parts by mass of a binder composed of a methacrylic copolymer (molecular weight: 30000, glass-transition temperature: -8°C), 2 parts by mass of dibutyl phthalate as a plasticizer, and 50 parts by mass of toluene / isopropanol mixed solvent (mass ratio = 3/2) as dispersion medium, to prepare slurry by ball-milling at approximately 60 rpm for 8 hours.

The obtained slurry was defoamed by condensation for adjusting viscosity thereof to 50 poises. After the slurry was passed through a filter of 100 meshes, applied and dried on a polyethylene terephthalate (PET) film by a doctor blade method to obtain an NiO / 3YSZ (65 / 35) green sheet having a thickness of 0.5 mm.

This green sheet was cut into predetermined measurement and baked under the atmosphere at a temperature of 1300°C for 2 hours to thereby obtain a disc-like substrate for test having a diameter of 34 mm × a thickness of 0.4 mm.

The distribution of conductive component and skeletal component was measured by an EDX method in the same manner as the above-mentioned Example 1, the redox resistance and conductivity were evaluated. The all of the results are shown in Table 1.

### Example 3

In a nylon pot into which zirconia ball having a diameter of 15 mm was charged, were put 50 parts by mass of nickel oxide coarse particles obtained in the above-mentioned Example 1, 20 parts by mass of the same nickel oxide fine particles manufactured by KISHIDA CHEMICAL Co., Ltd. as that used in the above-mentioned Example 1, 30 parts by mass of 3- mol% yttria stabilized zirconia (3YSZ) powder (trade name: "HSY-3.0" manufactured by Daiichi Kigenso Kagaku Kogyo Co., Ltd., an average particle diameter: 0.45 µm), 15 parts by mass of a binder composed of a methacrylic copolymer (molecular weight: 30000, glass-transition temperature: -8°C), 2 parts by mass of dibutyl phthalate as a plasticizer, and 50 parts by mass of toluene / isopropanol mixed solvent (mass ratio = 3/2) as dispersion medium, to prepare slurry by ball-milling at approximately 60 rpm for 12 hours.

A green sheet was prepared by using the slurry in the same manner as the above-mentioned Example 1, and similarly baked to obtain a substrate for test. Then, distribution of conductive component and skeletal component were measured by an EDX method in the same manner as the above-mentioned Example 1, and redox resistance and conductivity were evaluated. The results are shown in Table 1.

### Comparative Example 1

A substrate for test was prepared in the same manner as the above-mentioned Example 1 except for using 60 parts by mass of the same nickel oxide fine particles manufactured by KISHIDA CHEMICAL Co., Ltd. as that used in the above-mentioned Example 1, and 40 parts by mass of 3- mol% yttria stabilized zirconia (3YSZ) powder (trade name: "HSY-3. 0" manufactured by Daiichi Kigenso Kagaku Kogyo Co., Ltd., an average particle diameter: 0.45 µm), to measure distribution of conductive component and skeletal component by an EDX method, and evaluate redox resistance and conductivity in the same manner as Example 1.

As a result of EDS analysis, a portion where Ni was localized in a circular form was not observed, and it was confirmed that the whole had a cross section structure in which nickel oxide and 3YSZ were homogenously mixed.

In a redox resistance test, cracks were observed at the second time. The initial conductivity was 700 S/cm and the conductivity after two-time redox cycles was decreased to 180 S/cm. The all of the results are shown in Table 1.

### Comparative Example 2

A substrate for test was prepared in the same manner as the above-mentioned Example 1 except for using 60 parts by mass of the same nickel oxide coarse particles as that obtained in the above-mentioned Example 1, and 40 parts by mass of 3 mol% yttria stabilized zirconia (3YSZ) powder (trade name: "HSY-3.0" manufactured by Daiichi Kigenso Kagaku Kogyo Co., Ltd., an average particle diameter: 0.45 µm), to observe distribution of conductive component and skeletal component by an EDX method, and evaluate redox resistance and conductivity in the same manner as Example 1.

As a result of EDS analysis, a phase where Ni was localized in a circular form and only zirconia was localized was observed, and a phase where nickel oxide and 3YSZ were homogenously mixed was only slightly observed. Thus, five-time redox resistance tests caused no problem, however, it was confirmed that the initial conductivity was very low and conductive path was not sufficiently formed. The strength was as weak as 150 MPa.

**Table 1**

| | Example 1 | Example 2 | Example | 3 Comparative example 1 | Comparative example 2 |
|---|---|---|---|---|---|
| Conductive couarse particles | 40/65 | 45/65 | 50/70 | 0/60 | 60/60 |
| / Whole conductive component | | | | | |
| Conductive component | 65/35 | 65/35 | 70/30 | 60/40 | 60/40 |
| / Skeletal component | | | | | |
| Porosity (%) | 31 | 38 | 29 | 27 | 30 |
| Number of portions [A] (pieces) | 18 | 29 | 38 | 0 | 34 |
| Largest diameter of portions [A] (µm) | 27 | 36 | 22 | [A] was not observed | 52 |
| Average diameter of portions [A] (µm) | 13.4 | 16.2 | 15.9 | [A] was not observed | 21.5 |
| Number of redox resistance times (times) | good(5) | good(5) | good(5) | poor(2) | good(5) |
| Initial conductivity (S/cm) | 800 | 770 | 830 | 700 | 110 |
| Conductivity after redox resistance times (S/cm) | 550 | 490 | 570 | 180 | 120 |
| Three-point bending strength (MPa) | 240 | 230 | 220 | 280 | 140 |

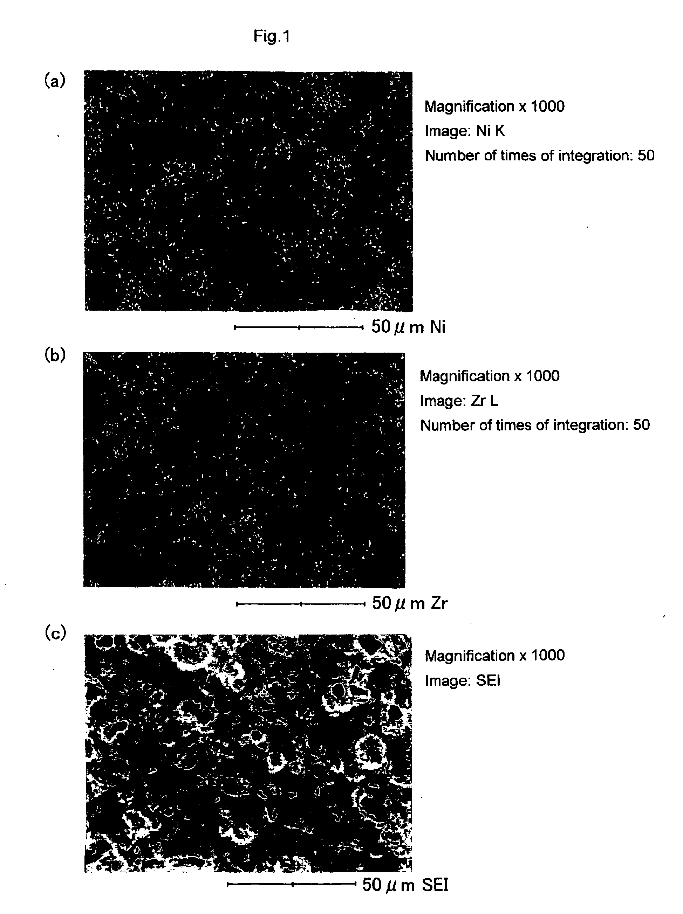

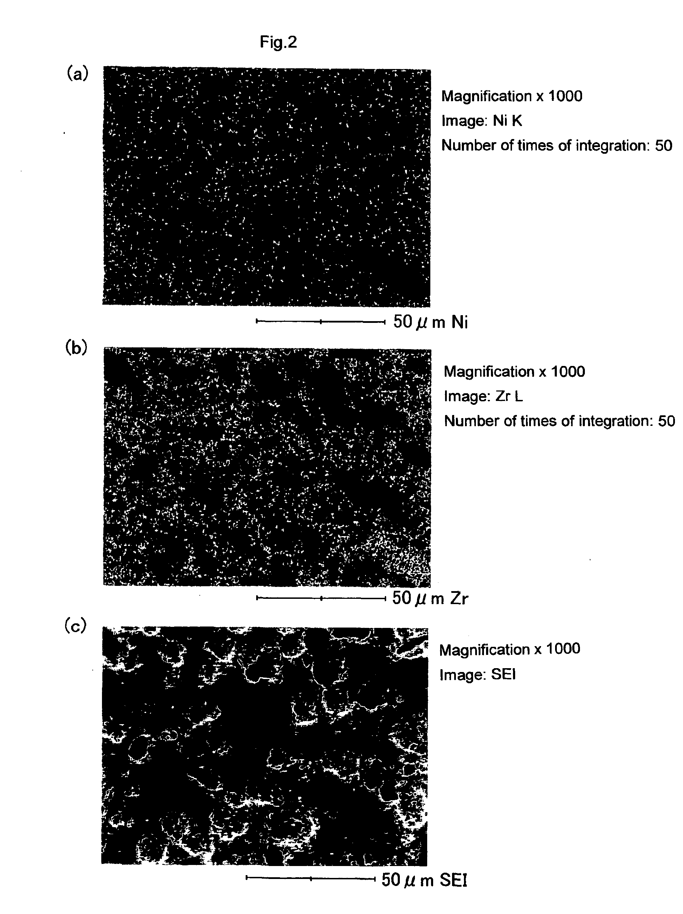

Figs. 1 (a), (b) and (c) are mapping pictures of which a magnification is 1000 times and an SEI image picture of which a magnification is 1000 times of Ni (conductive component) and Zr (skeletal component) obtained in the above-mentioned Example 1. Figs. 2 (a), (b) and (c) are mapping pictures of which a magnification is 1000 times and an SEI image picture of which a magnification is 1000 times of Ni (conductive component) and Zr (skeletal component) obtained in the above-mentioned Comparative Example 1.

In the above mapping pictures, the presence of metal is shown as a point, and the case of high abundance is shown as a red point, and a yellow point, a yellowish green point and a light-blue point show the abundance thereof in decreasing order, and the absence thereof is shown as a black point. Pores exist in a section region of the substrate and are also shown as a black point.

In Fig. 1 (b), a portion where circular or elliptical Zr does not exist, shown as a black point in the picture, and another portion where Zr exists, shown as a yellowish green point to a red point in the picture, are observed. In Fig. 1 (a), a portion where Ni exists particularly in quantities, shown as a yellowish green point to a red point in the picture, and another portion shown as a somewhat light yellowish green point in the picture are observed. Accordingly, it can be confirmed that a portion [AB] where the conductive component and the skeletal component are mixed with each other, and a portion [A] where only the conductive component exists are observed. Though a portion where Zr in an indeterminate form state does not exist is observed in Fig. 1 (b), the portion is excluded by reason of corresponding to pores in Fig. 1 (c).

On the other hand, it is observed in Fig. 2 (a) that Ni is dispersed approximately homogenously, and light and shade are less shown. It is confirmed that Zr is also dispersed approximately homogenously with the exclusion of pores from Fig. 2 (b) . That is, a portion [A] where only the conductive component exists is not observed in these figures.

### INDUSTRIAL APPLICABILITY

The present invention is comprised as described above, and is made to be capable of providing an anode support substrate for an electrolyte fuel cell, which has excellent initial generating performance and persistence of generating performance as well as so excellent redox resistance and strength properties as to keep cracks or breaks from occurring even when used in a state such as to be laminated in multitude by compounding with electrode printing and electrolyte, under hard conditions of great stacking load, high temperature, and being alternately subjected to oxidizing atmosphere and reducing atmosphere.

## Claims

1. An anode support substrate for a solid oxide fuel cell comprising:
40 to 80 mass % of a conductive component (A); and
20 to 60 mass % of a skeletal component (B);
wherein,
the support substrate has a porosity of 20 to 50 %;
in a mapping picture showing an area of 90 µm × 120 µm of a cross section region of the support substrate, magnified with magnification ratio of 1000 times and observed by Energy Dispersive Spectroscopy (EDS) using an energy dispersive X-ray analyzer,
a portion [AB] where the conductive component (A) and the skeletal component (B) are mixed with each other exists;
a portion [A] having only the conductive component (A) and no the skeletal component (B) exists;
five or more portions [A] are dotted; and
the dotted portion [A] has a largest length of 8 to 100 µm and an average length of 5 to 50 µm; and
the support substrate has a three-point bending strength of 200 MPa or more.

2. The anode support substrate according to Claim 1, wherein the conductive component (A) is oxide of one kind or more of element selected from a group consisting of Fe, Ni and Co; and the skeletal component (B) is zirconia stabilized by yttria of 2.5 to 10 mol% and/or zirconia stabilized by scandia of 3 to 12 mol%.

3. A process for producing the anode support substrate for a solid oxide fuel cell according to Claim 1 or 2, comprising steps of:
forming a sheet from a slurry including conductive component powder (a), skeletal component powder (b), a binder (c), and a dispersion medium (d); and
then baking the obtained sheet under an air atmosphere;
wherein,
10 to 50 mass % of conductive fine particle (a₁) having an average diameter of 0.1 to 3 µm, and a conductive coarse particle (a₂) having an average diameter of 5 to 50 µm, a specific surface area of 10 to 100 m²/g and a porosity of 30 to 80 % are used as the conductive component powder (a); and
a particle having an average diameter of 0.1 to 3 µm is used as the skeletal component powder (b).
